# EUROPEAN PATENT SPECIFICATION

(11) **EP 2 310 753 B1**
(45) Date of publication and mention of the grant of the patent: **09.05.2012**
(21) Application number: 09784155.5
(22) Date of filing: 17.07.2009
(51) Int. Cl.: F24F 11/00, F24F 3/044

(54) **AIR CONDITIONING SYSTEM AND METHOD OF AIR CONDITIONING**
KLIMAANLAGE UND LUFTKLIMATISIERUNGSVERFAHREN
SYSTÈME DE CLIMATISATION ET PROCÉDÉ DE CLIMATISATION

(30) Priority: 24.07.2008 FI 20085744
(43) Date of publication of application: 20.04.2011
(73) Proprietor: Halton OY, 47400 Kausala (FI)
(72) Inventor: HAGSTRÖM, Kim, FI-15520 Lahti (FI)
(74) Representative: Salonen, Esko Tapani
(86) International application number: PCT/FI2009/050631
(87) International publication number: WO 2010/010230

(56) References cited:
- GB-A- 2 222 878
- GB-A- 2 434 859
- JP-A- 59 069 645
- US-A- 4 995 307
- US-A- 5 344 069
- US-A- 5 863 246
- US-B1- 6 213 867

## Description

### TECHNICAL FIELD

An object of the invention is the air-conditioning system according to the preamble of claim 1.

An object of the invention is also the method of air-conditioning according to the preamble of claim 8.

### PRIOR ART

Known from prior art is an air-conditioning system comprising a main conduit, zone conduits branching therefrom, and room conduits branching from each zone conduit. Air is fanned by a fan into the main conduit, wherein air is distributed from the main conduit further into zone conduits and further from these into room conduits. The airflow venting from each room conduit into the room is regulated separately for each room. The aim in prior art air-conditioning systems is to maintain a constant airflow in the input-air chamber of the input-air device.

From prior art is further known:
- Constant-pressure controls, whereby is aimed at keeping the zone-conduit pressure at its constant setting.
- Adjustable dampers, whereby is aimed at balancing a network such that specific constant airflows to each terminal device are being effected.
- Constant-flow dampers i.e. variable dampers, whereby is aimed at constantly maintaining the airflow at its setting regardless of pressure variations in the conduits. Mechanical constant-flow dampers require a relatively large minimum pressure loss in order to operate reliably (internal pressure compensation using springs and bellows). In practise, these motorized constant-flow dampers are variable air-flow dampers (measuring and regulating the airflow) set at maintaining a constant airflow.
- Static constant-pressure conduits, wherein is aimed at maintaining a constant pressure in the conduits.

Further, input-air devices are known wherein recirculation of room air is induced by the incoming airflow. Known input-air devices or terminal devices comprise an input-air chamber, wherefrom a fresh incoming airflow is being flowed to a mixing chamber, and which fresh incoming airflow further induces the recirculated air to flow from the room through a heat exchanger to a mixing chamber.

U.S. patent 5,863,246 discloses a regulating system for air-conditioning based on a variable air volume. The system comprises a main conduit and zone conduits branching therefrom. Each zone conduit has a motor-driven damper and each motor is controlled by a zone regulator. The main conduit has a motor-driven fan blowing air through a heat exchanger to the zone conduits. The main conduit further has a pressure sensor measuring the pressure of the main conduit. The pressure sensor is connected to a fan-motor regulator controlling the fan motor. Each zone regulator and each fan-motor regulator are connected to a main regulator. Each zone regulator communicates position data on that zone damper to the main regulator. The main regulator at regular intervals checks the position data on the zone dampers and calculates based on this a setting for the pressure in the main conduit. The fan-motor regulator communicates the pressure data on the main conduit to the main regulator. If the pressure setting of the main conduit that was calculated in the main regulator differs from the pressure measured by pressure sensor, the main regulator alters the rotational speed of the fan motor. Thus, the pressure setting is calculated from position data on the zone dampers using a specific algorithm in the main regulator. For example, in a situation where at least one zone damper is almost open, the pressure setting will be increased, and in a situation where all zone dampers are almost closed, the pressure setting will be decreased.

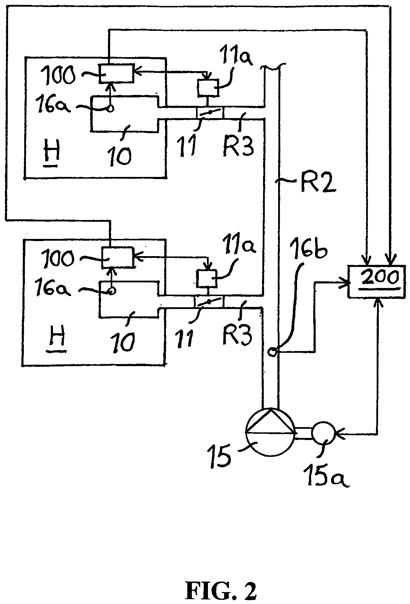

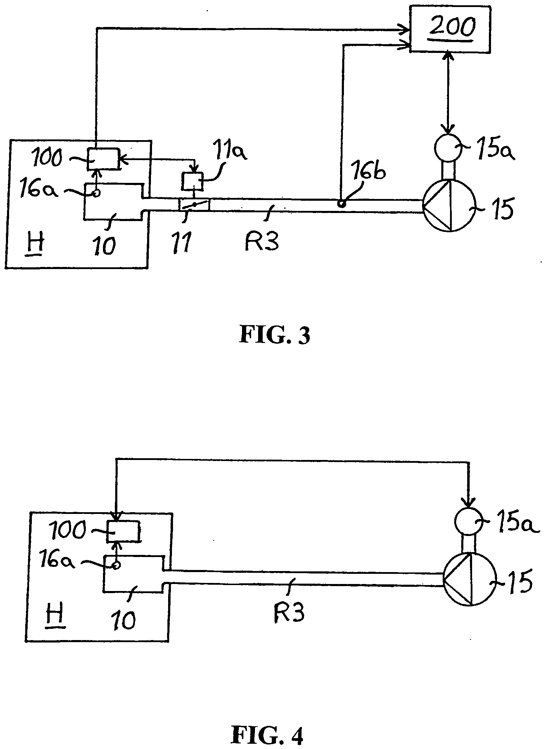

U.S. patent 4,995,307 also discloses a regulating system for air-conditioning based on a variable air volume. The system comprises a main conduit on the input-air side and room conduits having a terminal device and branching from the main conduit. In Fig. 2, a regulating unit according to this reference publication is shown, the unit consisting in a box equipped with a partition wall. One half of the partition wall comprises a hole and the other half comprises a damper. The pressure in the chambers on both sides of the damper is measured be pressure sensors in the chambers. The pressure difference measured by the pressure sensors correlates with the air volume passing through the damper. In Fig. 3, a terminal device for combined input and output air is shown, wherein also the pressure in the chambers on both sides of the damper is measured by pressure sensors in the chambers. Further, the main conduit on the input-air side has a pressure sensor measuring the pressure in the main conduit. The pressure sensor in the main conduit is connected to a central unit regulating a regulating unit on the input-air side and a similar regulating unit on the output-air side, based on the pressure measured and the pressure setting. The teaching of this U.S. patent 4,995,307 forms the closest prior art in the preamble of the independent claims 1 and 8.

U.S. patent 5,344,069 discloses a regulating system for air-conditioning. The system comprises a main conduit and room conduits branching therefrom. The volume of air supplied to each room is regulated by an airflow regulator. The airflow regulator has a damper and an airflow sensor. Further, there is a heat exchanger after the damper in the airflow direction. There also is a room regulator connected to each airflow regulator. The room regulator is connected to a room-specific control unit having a temperature-sensor measuring the room temperature. The room regulators are connected to a main regulator controlling a fan of an internal-air unit in the main conduit. Each room regulator sends the main regulator the following data: the difference between the temperature measured in the room and that of the setting, the airflow desired into the room, damper opening pitch, and the air-flow measured in the room conduit. The system further has an external-air unit having a heat exchanger and a compressor for compressing a heat transferring liquid. The circuit for the heat transferring liquid of the external-air unit is connected to the heat exchanger of the internal-air unit and to the heat exchangers in the rooms. The speed of the airflow must be in excess of about 2 m/s in order for the measuring result by the air-flow sensor as based on a propeller rotating by the effect from the airflow to be reliable.

One problem in solutions according to prior art has consisted in various operational conditions. An input-air device ought to be drivable at different heating and cooling powers under different operational conditions. The cooling and heating power requirement of the input-air device varies with the seasons, but in prior-art solutions accounting for operational conditions has not been possible. Known systems are being dimensioned and used based on the need associated with static peek power, which can cause users of spaces a sensation of draught in a situation lacking the need for peek power. The cooling and heating power of the input-air device is affected by the volume of fresh air conducted from the input-air chamber into the room being air-conditioned. A greater volume of fresh air induces a greater flow of recirculated air through the heat exchanger and vice versa. The volume of the flow of cooled or heated recirculated air conducted through the heat exchanger affects the cooling and heating power of the input-air device. Regulation based on the airflow as such does not present a solution to this problem, as then a regulating tolerance is created for a damper before the terminal device by raising the throttle of that damper, wherein also pressure losses increase.

### SUMMARY OF THE INVENTION

The basis of the solution according to the invention consists in principle of constant-pressure conduits. The object of the invention is to provide, by using variable constant pressure, an air-conditioning system with the dynamics of an air-conditioning system having variable airflow and lower loss from regulation, and simpler and more reliable regulation.

The main characteristics of the air-conditioning system according to the invention are disclosed in the characterizing part of claim 1.

As to the main characteristics of the method according to the invention, these are disclosed in the characterizing part of claim 8.

The air-conditioning system according to the invention comprises:
- means for producing and controlling a fresh incoming airflow,
- at least one room conduit, by which the fresh incoming airflow is conducted into a room being air-conditioned,
- a terminal device located at an of said at least one room conduit and which terminal device comprises an input-air chamber having nozzles or an nozzle gap, through which the fresh incoming airflow is conducted into the room being air-conditioned, which along with itself induces a recirculated airflow from the room, and then a combined airflow formed of the fresh incoming airflow and the recirculated airflow is conducted into the room being air-conditioned,
- a first regulating member located in said at least one room conduit before the terminal device,
- a first control unit located in connection with the room being air-conditioned. The air-conditioning system according to the invention is characterized in that it further comprises:
- a first pressure sensor adapted to the input-air chamber of the terminal device and connected to the first control unit,
- wherein the static pressure of the input-air chamber of the terminal device and therethrough of the airflow supplied from the terminal device into the room being air-conditioned is controlled by a first control unit controlling the first regulating member.

In the air-conditioning system according to the invention the static pressure of the input-air chamber of the terminal device is measured and is regulated by regulating a first regulating member, preferably a damper, before the terminal device. The solution according to the invention is aimed at maintaining the losses from regulating the terminal device at their minimum, and the throttle and system loss of the first regulating member before the terminal device at their minimum.

In solutions according to prior art, wherein the airflow supplied to the input-air chamber of a terminal device is measured by an airflow sensor, one typically will have to maintain the rate of airflow supplied to the terminal device at a value exceeding 2 m/s in order for the measurement to be reliable. Measuring based on the static pressure of the input-air chamber of the terminal device according to the invention does not have this problem. The rate of airflow supplied to the terminal device can be decreased below 2 m/s, and yet measuring static pressure reliably will function. The terminal device can be driven such that the regulating range of the damper connected with it is sized to proximate a completely open position. Then throttle losses caused by the damper will remain small. Regulation based on the static pressure of the input-air chamber of the terminal device according to the invention also is more exact than that based on the airflow of the input-air chamber.

The air-conditioning system according to the invention can be used in connection with a terminal device based on induction that does not of necessity have a heat exchanger. The greatest advantages are achieved when the air-conditioning system according to the invention is being used in connection with a terminal device comprising at least one heat exchanger. In a terminal device equipped with a heat exchanger, the recirculated airflow induced by the fresh incoming airflow is conducted through said at least one heat exchanger where the recirculated airflow is heated or cooled. When the fresh incoming airflow from the terminal device into the room being air-conditioned is increased, the induced recirculated airflow conducted through the heat exchanger also will increase, and vice versa. The added recirculated airflow through the heat exchanger in turn will cause an increase in the cooling or heating power of the terminal device.

A first control unit of the air-conditioning system according to the invention preferably comprises three different operating modes, these being eco-, normal- and boost-operating modes.

Eco-operating mode is used in situations where the room being air-conditioned is not being used. Then the pressure of the input-air chamber of the terminal device can be decreased to a minimum level, wherein also the air volume being conducted through the terminal device becomes regulated to a minimum level. Thus, the eco-operating mode is a kind of energy-saving mode for an empty space.

Normal-operating mode is used when there is little need for air-conditioning in the room being air-conditioned, e.g. during a transition period and the winter. The pressure setting of the input-air chamber of the terminal device is increased in relation to the eco-operating mode such that the air volume being conducted though the terminal device settles at the normal level. The pressure of the input-air chamber of the terminal device is maintained proximate to the pressure level of the zone conduit, wherein the first damper is almost open and the throttle across the damper is at its minimum. Thus, the normal-operating mode is being used most of the year, wherein energy is saved compared to traditional systems.

Boost-operating mode is a boosted operating mode used when there is a great need for air-conditioning the room being air-conditioned, e.g. during the summer or some other situation of exceptional great load. The pressure settings of the input-air chamber of the terminal device are increased in relation to the normal-operating mode such that the volumes of fresh airflow being conducted through the terminal device increase above the normal level. A greater volume of fresh airflow causes a greater recirculated airflow, which in turn increases the heating or cooling power of the terminal device.

In a solution equipped with three operating modes, the air-conditioning system can be designed for a lower operational level, which operational level at need can be increased for each mode separately by the operational modes mentioned above.

Next, the invention will be discussed with reference to one preferable embodiment shown in the figures of the enclosed drawings, however, the invention is not intended exclusively to be limited to said embodiment.

### SHORT DESCRIPTION OF THE FIGURES

Fig. 1 shows schematically one air-conditioning system according to the invention.
Fig. 2 shows schematically a second air-conditioning system according to the invention.
Fig. 3 shows schematically a third air-conditioning system according to the invention.
Fig. 4 shows schematically a fourth air-conditioning system according to the invention.
Fig. 5 shows a terminal device and a regulating circuit connected with it that can be used in an air-conditioning system according to the invention.

### BRIEF DESCRIPTION OF THE PREFERRED EMBODIMENTS

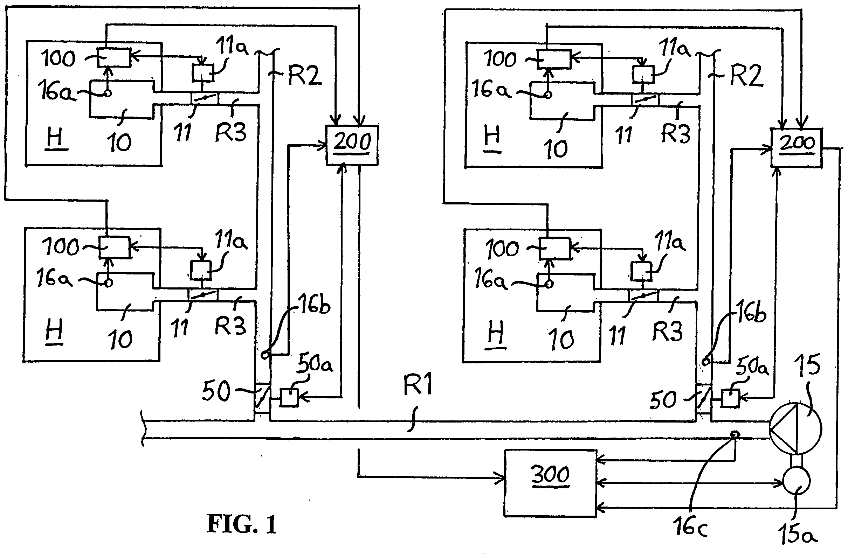

Fig. 1 shows schematically one air-conditioning system according to the invention. This air-conditioning system comprises conduits consisting in a main conduit R1, at least one zone conduit R2 branching from the main conduit R1, and at least one room conduit R3 branching from each zone conduit R2. In the figure are shown two zone conduits R2 and two room conduits R3 in each zone conduit R2, but of course, there can be more zone conduits R2, and also there can be more room conduits R3 in each zone conduit R2.

Each room conduit R3 terminates in a terminal device 10 of the air-conditioning. Each terminal device 10 is preceded by a first regulating member 11, preferably a damper. The air volume being conducted to said terminal device 10 is regulated with the first damper 11 by reducing or enlarging the throttle for the airflow supplied from the room conduit R3 to the terminal device 10. The first damper 11 is regulated by a first damper motor 11a and the first damper motor 11a is controlled by a first control unit 100 located in connection with said room H being air-conditioned, i.e., in room H, or in close proximity to that room. Pressure is measured in the terminal device 10 by a first pressure sensor 16a, whose measuring message is conducted to the first control unit 100.

At the beginning of each zone conduit R2 is a second regulating member 50, preferably a damper. The second damper 50 is regulated by a second damper motor 50a and the second damper motor 50a is controlled by a second control unit 200. Pressure is measured in the zone conduit R2 by a second pressure sensor 16b, whose measuring message is conducted to the second control unit 200.

The main conduit R1 has a fan 15, the driving motor 15a of which preferably is an electric motor having a variable number of revolutions. The driving motor 15a of the fan 15 is controlled by a third control unit 300. Pressure in the main conduit R1 is measured by a third pressure sensor 16c, whose measuring message is conducted to the third control unit 300.

A first control unit 100 in each room H is further connected to a second control unit 200 associated with the zone conduit R2 in question and the second control unit 200 of each zone conduit R2 is further connected to a third control unit 300.
Fig. 2 shows schematically a second air-conditioning system according to the invention. Here, the air-conditioning system has no main conduit or a third control unit. The fan 15 directly supplies air into the zone conduit R2 and the zone conduit R2 has no damper whatsoever. Pressure is measured in zone conduit R2 by a second pressure sensor 16b, whose measuring message is conducted to the second control unit 200. The second control unit 200 controls the driving motor 15a of the fan 15, which motor preferably is an electric motor having a variable number of revolutions. The terminal device 10 of the room conduit R3 and the measuring and regulating devices connected with it correspond to those shown in Fig. 1. Here also, the first control unit 100 in each room H is connected to a second control unit 200.
Fig. 3 shows schematically a third air-conditioning system according to the invention. Here, the air-conditioning system has no main conduit and no zone conduit whatsoever. The fan 15 directly supplies air to the room conduit R3. The pressure between the terminal device 10 and the fan 15 is measured at the room conduit R3 by a second pressure sensor 16b, whose measuring message is conducted to the second control unit 200. The second control unit 200 controls the driving motor 15a of the fan 15, which motor preferably is an electric motor having a variable number of revolutions. The terminal device 10 of the room conduit R3 and measuring and regulating devices connected with it correspond to those shown in Fig. 1. Here also, the first control unit 100 in each room H is connected to a second control unit 200.
Fig. 4 shows schematically a fourth air-conditioning system according to the invention. Here, the air-conditioning system has no main conduit and no zone conduit whatsoever. The fan 15 directly supplies air to the room conduit R3, wherein fan 15 operates as a means for supplying and controlling a flow of fresh incoming air. This embodiment has no damper whatsoever in the room conduit R3, but the first control unit 100 directly controls the driving motor 15a of the fan 15, which motor preferably is an electric motor having a variable number of revolutions. Here, fan 15 directly is controlled by a first pressure sensor 16a in the terminal device 10, based on the measuring messages. Thus, the fan 15 also operates as a first regulating member, wherein it replaces a separate damper.

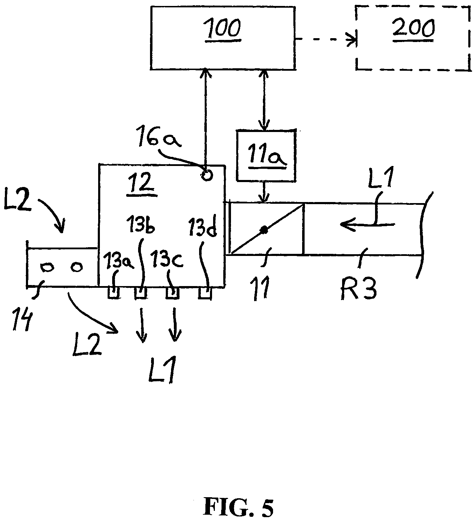

Fig. 5 shows a terminal device and a regulating circuit connected with it that can be used in the air-conditioning system according to the invention. Here, the regulating circuit corresponds to the situation shown in Figs. 1-3. The terminal device 10 comprises an input-air chamber 12 having nozzles 13a, 13b, 13c and 13d, through which fresh incoming airflow L1 is conducted from the input-air chamber 12 into the room. The fresh incoming airflow L1 conducted from the nozzles 13a, 13b, 13c, 13d induces a recirculated airflow L2 from the room to pass through a heat exchanger 14 and combine with the fresh airflow L1. The heat exchanger 14 cools or heats the recirculated airflow L2. The room conduit R3 has a regulating member 11 before the terminal device 10, preferably a damper, by which is regulated the air volume being conducted into the input-air chamber 12 of the terminal device 10 and from there into the room being air-conditioned. When the air volume being conducted into the input-air chamber 12 of the terminal device 10 changes, the pressure affecting the input-air chamber 12 also changes. The cross-sectional area of the nozzles 13a, 13b, 13c, 13d of the input-air chamber 12 is constant, hence bringing a greater volume of fresh air L1 into the input-air chamber 12 will have the effect that the flow of fresh air L1 is discharging at a greater rate from nozzles 13a, 13b, 13c, 13d. Rather than using individual nozzles 13a, 13b, 13c, 13d one can use an nozzle gap in the input-air chamber 12. In the figure is shown just one heat exchanger 14, but naturally, there can be two or several heat exchangers in connection with the terminal device 10. Here, the first control unit 100 controls the damper motor 11a controlling the first damper 11. The first control unit 100 is further connected to a second higher-level control unit 200.

Next, the principles of regulation of the air-conditioning system shown in Fig. 1 will be discussed.

Each room H is independently regulated by a first control unit 100 in the room based on pressure measured by a first pressure sensor 16a at the input-air chamber 12 of the terminal device 10. The first control unit 100 regulates a first damper 11 with a first damper motor 11a. The first control unit 100 has three operating modes i.e., eco-, normal- and boost-operating modes.

Eco-operating mode is used in situations where the room H being air-conditioned is not being used. Then, the pressure of the input-air chamber 12 of the terminal device 10 can be decreased to a minimum level, wherein the air volume being conducted through the terminal device 10 also becomes regulated to a minimum level. Thus, the eco-operating mode is a kind of energy-saving mode for an empty space.

Normal-operating mode is used when there is little need for air-conditioning the room being air-conditioned, e.g. during a transition period and the winter. The pressure settings of the input-air chamber 12 of the terminal device 10 are increased in relation to the eco-operating mode such that air volume being conducted through the terminal device 10 settles at the normal level. The pressure of the input-air chamber 12 of the terminal device 10 is maintained proximate to the zone conduit R2 pressure level, wherein the first damper 11 is almost open and the throttle across the first damper 11 at its minimum. Thus, the normal-operating mode is being used most of the year, wherein energy is saved compared to traditional systems.

Boost-operating mode is a boosted operating mode used when there is a great need for air-conditioning the room being air-conditioned, e.g. during the summer or some other situation of exceptional great load. The pressure settings of the input-air chamber 12 of the terminal device 10 are increased in relation to the normal-operating mode such that the volumes of fresh airflow being conducted through the terminal device 10 increase above the normal level. A greater volume of fresh airflow causes a greater flow of recirculated air, which in turn increases the heating or cooling power of the terminal device 10.

For each of the three operating modes mentioned above, pressure settings, based on which regulation occurs, have been designed and programmed, based on experimental measurements and calculations, for the terminal device 10. In regulation, discrete pressure settings can be used, e.g. those inserted in a table, or regulation can be based on using a mathematical function, wherein the regulation curve is continuous. When the pressure measured in the input-air chamber 12 differs from that of the setting, the first regulating unit 100 gives a control instruction to first damper motor 11a that opens or closes the first damper 11 step by step until the pressure measured by the input-air chamber 12 of the terminal device 10 matches the pressure setting.

The object is to maintain a constant pressure in each zone conduit R2. When the first control unit 100 of one room H opens or closes the first damper 11 connected with it, the pressure changes in that zone conduit R2. A second pressure sensor 16b located in that zone conduit R2 detects this pressure change and communicates the measured pressure data to a second control unit 200. The second control unit 200 gives based on this a control instruction to a second damper motor 50a that opens or closes a second damper 50. Closing or opening the second damper 50 is done through predetermined steps until the pressure measured by a second pressure sensor 16b in that zone conduit R2 corresponds to the pressure setting of that zone conduit R2.

The object is also to maintain a constant pressure in the main conduit R1. When the second damper 50 of any zone conduit R2 branching from the main conduit R1 is opened or closed, the pressure changes in the main conduit R1. A third pressure sensor 16c located in the main conduit R1 detects this pressure change and communicates the measured pressure data to a third control unit 300. The third control unit 300 gives a control instruction to the motor 15a of a fan 15 to increase or decrease the rotational speed. Increasing or decreasing the rotational speed of the motor 15a of the fan 15 is done by predetermined steps until the pressure measured by a third pressure sensor 16c at the main conduit R1 corresponds to the pressure setting of the main conduit R1.

When a first damper 11 of one or several rooms H connected with the zone conduit R2 completely or almost completely is closed, the pressure in that zone conduit R2 increases. A second pressure sensor 16b of that zone conduit R2 detects this pressure increase and communicates the data on the pressure increase to a second control unit 200. Then, the second control unit 200 controls a second damper motor 50a of that zone conduit R2 to increase the throttle of the second damper 50. Thus, in such a situation no communication occurs between the first 100 and second 200 control units. The second control unit 200 independently regulates the second damper 50 based on the measuring data of second pressure sensor 16b.

In addition, one can arrange communication between the first 100 and second 200 control units to occur in certain situations.

When a first damper 11 of any room H is open more than 85 %, the first control unit 100 of that room H communicates indication data on the change of the setting in the form of a first message to a second control unit 200. Then, the second control unit 200 increases the pressure setting of a zone conduit R2 connected with that room conduit R3 and opens a second damper 50 of the zone conduit R2 until the static pressure of that zone conduit R2 and the room conduits R3 branching from it increases to a new setting. Now, the room H where the first damper 11 was completely open receives the necessary added air volume, wherein the first damper 11 located there gathers a regulation margin. The air volume in other rooms H connected with that zone conduit R2 also increases, wherein the pressure in the input-air chamber 12 of the terminal device 10 also increases to exceed the setting. Based on this, the first control unit 100 of these other rooms H closes the first damper 11 by predetermined steps until the pressure in the input-air chamber 12 of the terminal unit 10 again has reached the setting. Thus, the first control unit 100 of each room H totally independently handles the regulation of its own room H based on the pressure measured by the terminal device 10 of that room H at the input-air chamber 12.

When the first control unit 100 of the room H switches to a lower-pressure operating mode, i.e., from boost-operating mode to normal-operating mode or from normal-operating mode to eco-operating mode, the control unit 100 communicates this data to a second control unit 200. When the second control unit 200 detects that all the first control units 100 of the rooms H connected with that zone conduit R2 have switched to a lower-pressure operating mode, the second control unit 200 changes the pressure setting of that zone conduit R2 to a predetermined lower level.

The pressure setting of a second control unit 200 connected with a certain zone conduit R2 also can be changed as controlled by a clock in accordance with a preprogrammed sequence. In this operational model, the pressure setting of the second control unit 200 connected with a zone conduit R2 can be changed for a specified time period to a lower or higher pressure level as requested by the first control unit 100 of any room H, and then the pressure setting of the zone conduit R2 is reset to the level prevailing prior to the state of change.

Communication between the second control unit 200 and the third control unit 300 in a situation of changing pressure settings can be performed similarly to that shown above regarding communication between the first control unit 100 and the second control unit 200.

Next, the regulation of the air-conditioning system shown in Fig. 2 will be discussed.

Here, room-specific H regulations operate similarly to that shown in Fig. 1. Here, a second control unit 200 regulates the fan motor 15a of a fan 15 in a zone conduit R2. When the pressure measured by a second pressure sensor 16b changes in the zone conduit R2, the second control unit 200 gives a control instruction to the fan motor 15a of fan 15 to increase or decrease the number of revolutions of fan motor 15a. In addition, one can arrange communication between the first 100 and second 200 control units to occur in certain situations, similarly to that in Fig. 1.

Next, the regulation of the air-conditioning system shown in Fig. 3 will be discussed.

Here, room regulation functions similarly to that in Fig. 1. Here, a second control unit 200 regulates the fan motor 15a of a fan 15 in a room conduit R3. When the pressure in room conduit R3 as measured by a second pressure sensor 16b changes, a second control unit 200 gives a control instruction to the fan motor 15a of the fan 15 to increase or decrease the number of revolutions of fan motor 15a. In addition, one can arrange communication between the first 100 and second 200 control units to occur in certain situations, similarly to that in Fig. 1.

Next, the regulation of the air-conditioning system shown in Fig. 4 will be discussed.

Here, the first control unit 100 directly regulates a fan motor 15a of a fan 15 in the room conduit R3. When the pressure measured by a first pressure sensor 16a changes, a first control unit 100 in a room conduit R3 gives a control instruction to the fan motor 15a of the fan 15 to increase or decrease the number of revolutions of the fan motor 15a.

The room H shown in the figures can be any space desired to be air-conditioned. It could be a matter of, e.g., an office space, conference space, hotel room, residential space, industrial space, storage space etc.

The solution according to the invention has no need for continuous communications between the first 100 and second 200, and the second 200 and third 300 control units. Requests by a lower level control unit can be communicated to an upper-level control unit as transaction data. For example, damper 11 position data on the opening of a first damper 11 in excess of 85 % need not of necessity be communicated from a first control unit 100 to a second control unit 200. It suffices that the first control unit 100 detects that the pressure of the input-air chamber 12 of the terminal device 10 no longer can be increased, wherein the first control unit 100 sends the second control unit 200 a request to increase the pressure. Alternatively, the first control unit 100 can communicate position data on the first damper 11 to the second control unit 200. Similarly, e.g. in eco-operating mode, the first control unit 100 can report transaction or mode data to the second control unit 200, or alternatively, the first control unit 100 can drive the first damper 11 to close, wherein a second pressure sensor 16b in a zone conduit R2 detects the pressure increase and communicates this information to the second control unit 200, which decreases the pressure setting of the zone conduit R2.

Shown above are only some preferred embodiments of the invention, and it will be obvious to a person skilled in the art that these may be submitted to numerous modifications within the scope of the appended claims.

## Claims

1. An air-conditioning system, comprising:
- means (15, 50, 200, 300) for producing and controlling a fresh incoming airflow (L1),
- at least one room conduit (R3), by which a fresh incoming airflow (L1) is conducted into a room (H) being air-conditioned,
- a terminal device (10),
- a first regulating member (11, 15) located in the room conduit (R2) before the terminal device (10),
- a first control unit (100) located in connection with the room (H) being air-conditioned,
- a first pressure sensor (16a) adapted to the terminal device (10) and connected to the first control unit (100),
**characterized in that**:
- said terminal device (10) is located at an end of said at least one room conduit (R3) and which terminal device (10) comprises an input-air chamber (12) having nozzles (13a, 13b, 13c, 13d) or an nozzle gap, through which the fresh incoming airflow (L1) is conducted into the room (H) being air-conditioned, which along with itself induces a recirculated airflow (L2) from the room (H), and then a combined airflow (L1+L2) formed of the fresh incoming airflow (L1) and the recirculated airflow (L2) is conducted into the room (H) being air-conditioned,
- said first pressure sensor (16a) is adapted to the input-air chamber (12) of the terminal device (10),
- wherein the pressure of the input-air chamber (12) of the terminal device (10) and therethrough of the airflow supplied from the terminal device (10) into the room being air-conditioned is controlled by the first control unit (100) controlling the first regulating member (11, 15).

2. The air-conditioning system according to claim 1, **characterized in that** the terminal device (10) further comprises at least one heat exchanger (14), through which the recirculated airflow (L2) induced by the fresh incoming airflow (L1) is conducted before the recirculated airflow (L2) is combined with the fresh incoming airflow (L1).

3. The air-conditioning system according to claim 1 or 2, **characterized in that** the air-conditioning system further comprises:
- a zone conduit (R2), wherefrom said at least one room conduit (R3) is branching,
- a second pressure sensor (16b) located in the zone conduit (R2),
- wherein the means (15, 200) for producing and controlling the fresh incoming airflow (L1) comprise:
- a fan (15) located at the beginning of the zone conduit (R2) and by which a fresh incoming airflow (L1) is supplied into the zone conduit (R2),
- a second control unit (200) whereby the fan (15) is controlled based on the measuring messages of the second pressure sensor (16b).

4. The air-conditioning system according to claim 1 or 2, **characterized in that** the air-conditioning system further comprises:
- at least one zone conduit (R2), wherefrom said at least one room conduit (R3) is branching,
- a main conduit (R1) wherefrom said at least one zone conduit (R2) is branching,
- a second pressure sensor (16b) located in each zone conduit (R2),
- a third pressure sensor (16c) located in the main conduit (R1),
- wherein the means (15, 50, 200, 300) for producing and controlling the fresh incoming airflow (L1) comprise:
- a fan (15) located at the beginning of the main conduit (R1) and by which a fresh incoming airflow (L1) is supplied into the main conduit (R1),
- a second regulating member (50) located at the beginning of each zone conduit (R2) and whereby fresh incoming airflow conducted from the main conduit (R1) into the zone conduit (R2) is being regulated,
- a second control unit (200) whereby a second regulating member (50) is controlled based on the measuring messages of the second pressure sensor (16b),
- a third control unit (300) whereby a fan (15) is controlled based on the measuring messages of the third pressure sensor (16c).

5. The air-conditioning system according to any of claims 1-4, **characterized in that** the first control unit (100) is programmed to have three operating modes:
- an eco-operating mode, wherein the terminal device (10) is driven at a low pressure and, thus, also with a low air volume,
- a normal-operating mode, wherein the terminal device (10) is driven in relation to the eco-operating mode at greater pressures and, thus, also with greater air volumes,
- a boost-operating mode, wherein the terminal device (10) is driven in relation to the normal operating mode at greater pressures and, thus, also with greater air volumes.

6. The air-conditioning system according to claim 5, **characterized in that** the first control unit (100) of each room (H) is connected to a second control unit (200), wherein the first control unit (100) sends the second control unit (200) a message:
- when the first regulating member (11) of the room conduit (R3) is open more than 85 %, wherein the second control unit (200) increases the pressure setting of the zone conduit (R2), which enables increasing the air volume being supplied to said at least one room conduit (R3),
- when the first control unit (100) of the room (H) switches to a lower-pressure operating mode, i.e., from boost-operating mode to normal-operating mode or from normal-operating mode to eco-operating mode, wherein the second control unit (200) decreases the pressure setting of that zone conduit (R2) when the second control unit (200) detects that all the first control units (100) of the rooms (H) connected with that zone conduit (R2) have switched to a lower-pressure operating mode.

7. The air-conditioning system according to claim 6, **characterized in that** the second control unit (200) comprises a timer device, wherein the pressure setting of the second control unit (200) connected with the zone conduit (R2) is changed for a specified time period to a lower or higher pressure level, and then the pressure setting of the zone conduit (R2) is reset to the level prevailing prior to the state of change.

8. A method of air-conditioning, wherein:
- means (15, 50, 200, 300) are being formed for producing and controlling a fresh incoming airflow (L1),
- at least one room conduit (R3) is formed, whereby the fresh incoming airflow (L1) is conducted into a room (H) being air-conditioned,
- a terminal device (10) is used,
- the airflow being conducted from each terminal device (10) into the room is being regulated by regulating a first regulating member (11, 15) present in the room conduit (R3) before the terminal device (10) with a first control unit (100),
- the pressure in the terminal device (10) is being measured by a first pressure sensor (16a),
**characterized in that**:
- said terminal device (10) is located at an end of each room conduit (R3), which terminal device (10) comprises an input-air chamber (12) having nozzles (13a, 13b, 13c, 13d) or a nozzle gap, through which the fresh incoming airflow (L1) is conducted into the room (H) being air-conditioned, which along with itself induces a recirculated airflow (L2) from the room, and then a combined airflow (L1+L2) formed of the fresh incoming airflow (L1) and the recirculated airflow (L2) is conducted into the room (H) being air-conditioned,
- said first pressure sensor (16a) measures the pressure in the input-air chamber (12) of the terminal device (10),
- the pressure in the input-air chamber (12) of the terminal device (10) and therethrough the airflow supplied from the terminal device (10) into the room being air-conditioned are being regulated with a first control unit (100) controlling the first regulating member (11, 15).

9. The method according to claim 8, **characterized in that** the recirculated airflow (L2) induced by the fresh incoming airflow (L1) is being conducted from the room through at least one heat exchanger (14) included in the terminal device (10) before the recirculated airflow (L2) is being combined with the incoming airflow (L1).

10. The method according to claim 8 or 9, **characterized by**:
- a zone conduit (R2) is being formed, from where said at least one room conduit (R3) is branching,
- a second pressure sensor (16b) is being located into the zone conduit (R2),
- said means (15, 200) for producing and controlling the fresh incoming airflow (L1) are being formed:
- by locating a fan (15) at the beginning of the zone conduit (R2), by which fan (15) is supplied fresh incoming airflow (L1) into the zone conduit (R2),
- by forming a second control unit (200), by which the fan (15) is being controlled based on the measuring messages of the second pressure sensor (16b).

11. The method according to claim 8 or 9, **characterized by**:
- at least one zone conduit (R2) is being formed, from where said at least one room conduit (R3) is branching,
- a main conduit (R1) is being formed, from where said at least one zone conduit (R2) is branching,
- a second pressure sensor (16b) is being located into each zone conduit (R2),
- a third pressure sensor (16c) is being located into the main conduit (R1),
- said means (15, 50, 200, 300) for producing and controlling a fresh incoming airflow (L1) are being formed:
- by locating a fan (15) at the beginning of the main conduit (R1), by which fan (15) the fresh incoming airflow (L1) is supplied into the main conduit (R1),
- by locating a second regulating member (50) at the beginning of each zone conduit (R2), by which second regulating member (50) the fresh incoming airflow conducted from the main conduit (R1) into the zone conduit (R2) is regulated,
- by forming a second control unit (200), by which a second regulating member (50) is controlled based on the measuring messages of the second pressure sensor (16b),
- by forming a third control unit (300), by which the fan (15) is being controlled based on the measuring messages of the third pressure sensor (16c).

12. The method according to any of claims 8-11, **characterized in that** the first control unit (100) is being programmed to have three operating modes:
- an eco-operating mode, wherein the terminal device (10) is driven at a low pressure and thus, also with a low air volume,
- a normal-operating mode, wherein the terminal dcvicc (10) is driven in relation to the eco-operating mode at greater pressures and, thus, also with greater air volumes,
- a boost-operating mode, wherein the terminal device (10) is driven in relation to the normal operating mode at greater pressures and, thus, also with greater air volumes.

13. The method according to claim 12, **characterized in that** the first control unit (100) of each room (H) is being connected to a second control unit (200), wherein the first control unit (100) sends the second control unit (200) a message:
- when the first regulating member (11) of the room conduit (R3) is open more than 85 %, wherein the second control unit (200) increases the pressure setting of the zone conduit (R2), which enables increasing the air volume being supplied to said at least one room conduit (R3),
- when the first control unit (100) of the room (H) switches to a lower-pressure operating mode, i.e., from boost-operating mode to normal-operating mode or from normal-operating mode to eco-operating mode, wherein the second control unit (200) decreases the pressure setting of that zone conduit (R2) when the second control unit (200) detects that all the first control units (100) of the rooms (H) connected with that zone conduit (R2) have switched to a lower-pressure operating mode.

14. The method according to claim 13, **characterized in that** the pressure setting of the second control unit (200) connected with the zone conduit (R2) is being changed for a specified time period to a lower or higher pressure level, and then the pressure setting of the zone conduit (R2) is being reset to the level prevailing prior to the state of change.

## Patentansprüche

1. Klimaanlage, welche enthält:
- Elemente (15, 50, 200, 300) zum Erzeugen und Steuern eines eingehenden Frischluftstroms (L1),
- zumindest ein Raumleitungsrohr (R3), durch welches der Frischluftstrom (L1) in einen zu klimatisierenden Raum (H) geleitet wird,
- eine Anschlussvorrichtung (10),
- ein erstes Steuerelement (11, 15), welches im Raumleitungsrohr (R2) vor der Anschlussvorrichtung (10) positioniert ist,
- eine erste Steuereinheit (100), welche in Verbindung mit dem zu klimatisierenden Raum (H) positioniert ist,
- einen ersten Drucksensor (16a), welcher an die Anschlussvorrichtung (10) adaptiert ist und mit der ersten Steuereinheit (100) verbunden ist,
**dadurch gekennzeichnet, dass**
- die Anschlussvorrichtung (10) an einem Ende des zumindest einen Raumleitungsrohrs (R3) positioniert ist, und wobei die Anschlussvorrichtung (10) eine Eingangsluftkammer (12) enthält, welche Düsen (13a, 13b, 13c, 13d) oder einen Düsenspalt hat, durch welchen der eingehende Frischluftstrom (L1) in den zu klimatisierenden Raum (H) geleitet wird, welche entlang davon einen in Umlauf gebrachten Luftstrom (L2) von dem Raum (H) induziert, und wobei dann ein zusammengefasster Luftstrom (L1 + L2), welcher aus dem eingehenden Frischluftstrom (L1) und dem in Umlauf gebrachten Luftstrom (L2) ausgebildet ist, in den zu klimatisierenden Raum (H) geleitet wird,
- wobei der erste Drucksensor (16a) an die Eingangsluftkammer (12) der Anschlussvorrichtung (10) adaptiert ist,
- wobei der Druck der Eingangsluftkammer (12) der Anschlussvorrichtung (10) und somit der Luftstrom, welcher von der Anschlussvorrichtung (10) in den zu klimatisierenden Raum zugeführt wird, durch die erste Steuereinheit (100) gesteuert wird, welche das erste Steuerelement (11, 15) steuert.

2. Klimaanlage nach Anspruch 1, **dadurch gekennzeichnet, dass** die Anschlussvorrichtung (10) ferner zumindest einen Wärmetauscher (14) enthält, durch welchen der in Umlauf gebrachte Luftstrom (L2), welcher durch den eingehenden Frischluftstrom (L1) induziert ist, geleitet wird, bevor der in Umlauf gebrachte Luftstrom (L2) mit dem eingehenden Frischluftstrom (L1) zusammengefasst wird.

3. Klimaanlage nach Anspruch 1 oder 2, **dadurch gekennzeichnet, dass** die Klimaanlage ferner enthält:
- ein Bereichsleitungsrohr (R2), von welchem aus das zumindest eine Raumleitungsrohr (R3) abzweigt,
- einen zweiten Drucksensor (16b), welcher im Bereichsleitungsrohr (R2) positioniert ist,
- wobei die Elemente (15, 200) zum Erzeugen und Steuern des eingehenden Frischluftstroms (L1) enthalten:
- einen Lüfter (15), welcher zu Beginn des Bereichsleitungsrohrs (R2) positioniert ist, und durch welchen ein eingehender Frischluftstrom (L1) in das Bereichsleitungsrohr (R2) zugeführt wird,
- eine zweite Steuereinheit (200), wobei der Lüfter (15) basierend auf einer Messinformation des zweiten Drucksensors (16b) gesteuert wird.

4. Klimaanlage nach Anspruch 1 oder 2, **dadurch gekennzeichnet, dass** die Klimaanlage ferner enthält:
- zumindest ein Bereichsleitungsrohr (R2), von welchem aus das zumindest eine Raumleitungsrohr (R3) abzweigt,
- ein Hauptleitungsrohr (R1), von welchem aus das zumindest eine Bereichsleitungsrohr (R2) abzweigt,
- einen zweiten Drucksensor (16b), welcher in jedem Bereichsleitungsrohr (R2) positioniert ist,
- einen dritten Drucksensor (16c), welcher im Hauptleitungsrohr (R1) positioniert ist,
- wobei die Elemente (15, 50, 200, 300) zum Erzeugen und Steuern des eingehenden Frischluftstroms (L1) enthalten:
- einen Lüfter (15), welcher zu Beginn des Hauptleitungsrohrs (R1) positioniert ist, und durch welchen ein eingehender Frischluftstrom (L1) in das Hauptleitungsrohr (R1) zugeführt wird,
- ein zweites Steuerelement (50), welches zu Beginn von jedem Bereichsleitungsrohr (R2) positioniert ist, und wobei ein eingehender Frischluftstrom, welcher vom Hauptleitungsrohr (R1) in das Bereichsleitungsrohr (R2) geleitet wird, gesteuert wird,
- eine zweite Steuereinheit (200), wobei ein zweites Steuerelement (50) basierend auf der Messinformation vom zweiten Drucksensor (16b) gesteuert wird,
- eine dritte Steuereinheit (300), wobei ein Lüfter (15) basierend auf der Messinformation vom dritten Drucksensor (16c) gesteuert wird.

5. Klimaanlage nach einem der Ansprüche 1 bis 4, **dadurch gekennzeichnet, dass** die erste Steuereinheit (100) derart programmiert ist, dass sie drei Betriebsmodi enthält:
- einen Sparbetriebsmodus, bei welchem die Anschlussvorrichtung (10) bei einem niedrigen Druck und somit ebenso mit einem geringen Luftvolumen angetrieben wird,
- einen Normalbetriebsmodus, bei welchem die Anschlussvorrichtung (10), im Vergleich zum Sparbetriebsmodus, bei größeren Drücken und somit ebenso mit größeren Luftvolumina angetrieben wird,
- einen Verstärkungsbetriebsmodus, bei welchem die Anschlussvorrichtung (10), im Vergleich zum Normalbetriebsmodus, bei größeren Drücken und somit ebenso mit größeren Luftvolumina angetrieben wird.

6. Klimaanlage nach Anspruch 5, **dadurch gekennzeichnet, dass** die erste Steuereinheit (100) von jedem Raum (H) mit einer zweiten Steuereinheit (200) verbunden ist, wobei die erste Steuereinheit (100) eine Information an die zweite Steuereinheit (200) überträgt:
- wenn das erste Steuerelement (11) des Raumleitungsrohrs (R3) um mehr als 85% geöffnet ist, wobei die zweite Steuereinheit (200) die Druckeinstellung des Bereichsleitungsrohrs (R2) erhöht, wodurch ein Anstieg des Luftvolumens, welches dem zumindest einen Raumleitungsrohr (R3) zugeführt wird, ermöglicht wird,
- wenn die erste Steuereinheit (100) des Raums (H) zu einem Betriebsmodus mit geringerem Druck umschaltet, das heißt vom Verstärkungsbetriebsmodus zum Normalbetriebsmodus oder vom Normalbetriebsmodus zum Sparbetriebsmodus, wobei die zweite Steuereinheit (200) die Druckeinstellung des Bereichsleitungsrohrs (R2) verringert, wenn die zweite Steuereinheit (200) erfasst, dass alle erste Steuereinheiten (100) des Raums (H), welche mit dem Bereichsleitungsrohr (R2) verbunden sind, zu einem Betriebsmodus mit geringerem Druck umgeschaltet haben.

7. Klimaanlage nach Anspruch 6, **dadurch gekennzeichnet, dass** die zweite Steuereinheit (200) eine Zeitvorrichtung enthält, wobei die Druckeinstellung der zweiten Steuereinheit (200), welche mit dem Bereichsleitungsrohr (R2) verbunden ist, innerhalb einer spezifischen Zeitperiode auf einen niedrigeren oder höheren Druckpegel geändert wird, und dann die Druckeinstellung des Bereichsleitungsrohrs (R2) auf den Pegel zurückgesetzt wird, welcher vor dem Zustand der Änderung vorherrschte.

8. Klimatisierungsverfahren, bei welchem:
- Elemente (15, 50, 200, 300) zum Erzeugen und Steuern eines eingehenden Frischluftstroms (L1) ausgebildet werden,
- zumindest ein Raumleitungsrohr (R3) ausgebildet wird, wobei der eingehende Frischluftstrom (L1) in einen zu klimatisierenden Raum (H) geleitet wird,
- eine Anschlussvorrichtung (10) verwendet wird,
- der Luftstrom, welcher von jeder Anschlussvorrichtung (10) in den Raum geleitet wird, durch Steuern eines ersten Steuerelements (11, 15), welches im Raumleitungsrohr (R3) vor der Anschlussvorrichtung (10) vorliegt, durch eine erste Steuereinheit (100) gesteuert wird,
- der Druck in der Anschlussvorrichtung (10) durch einen ersten Drucksensor (16a) gemessen wird,
**dadurch gekennzeichnet, dass**
- die Anschlussvorrichtung (10) an einem Ende von jedem Raumleitungsrohrs (R3) positioniert wird, wobei die Anschlussvorrichtung (10) eine Eingangsluftkammer (12) enthält, welche Düsen (13a, 13b, 13c, 13d) oder einen Düsenspalt hat, durch welchen der eingehende Frischluftstrom (L1) in den zu klimatisierenden Raum (H) geleitet wird, welche entlang davon einen in Umlauf gebrachten Luftstrom (L2) von dem Raum (H) induziert, und wobei dann ein zusammengefasster Luftstrom (L1 + L2), welcher aus dem eingehenden Frischluftstrom (L1) und dem in Umlauf gebrachten Luftstrom (L2) ausgebildet wird, in den zu klimatisierenden Raum (H) geleitet wird,
- der erste Drucksensor (16a) den Druck in der Eingangsluftkammer (12) der Anschlussvorrichtung (10) misst,
- der Druck in der Eingangsluftkammer (12) der Anschlussvorrichtung (10) und somit der Luftstrom, welcher von der Anschlussvorrichtung (10) in den zu klimatisierenden Raum zugeführt wird, durch eine erste Steuereinheit (100) gesteuert werden, welche das erste Steuerelement (11, 15) steuert.

9. Verfahren nach Anspruch 8, **dadurch gekennzeichnet, dass** der in Umlauf gebrachte Luftstrom (L2), welcher durch den eingehenden Frischluftstrom (L1) induziert wird, von dem Raum durch zumindest einen Wärmetauscher (14), welcher in der Anschlussvorrichtung (10) enthalten ist, geleitet wird, bevor der in Umlauf gebrachte Luftstrom (L2) mit dem eingehenden Luftstrom (L1) zusammengefasst wird.

10. Verfahren nach Anspruch 8 oder 9, **dadurch gekennzeichnet, dass**:
- ein Bereichsleitungsrohr (R2) ausgebildet wird, von welchem aus das zumindest eine Raumleitungsrohr (R3) abzweigt,
- ein zweiter Drucksensor (16b) im Bereichsleitungsrohr (R2) positioniert wird,
- die Elemente (15, 200) zum Erzeugen und Steuern des eingehenden Frischluftstroms (L1) ausgebildet werden:
- durch Positionieren eines Lüfters (15) zu Beginn des Bereichsleitungsrohrs (R2), wobei durch den Lüfter (15) der eingehende Frischluftstrom (L1) in das Bereichsleitungsrohr (R2) zugeführt wird,
- durch Ausbilden einer zweiten Steuereinheit (200), durch welche der Lüfter (15) basierend auf der Messinformation vom zweiten Drucksensor (16b) gesteuert wird.

11. Verfahren nach Anspruch 8 oder 9, **dadurch gekennzeichnet, dass**:
- zumindest ein Bereichsleitungsrohr (R2) ausgebildet wird, von welchem aus das zumindest eine Raumleitungsrohr (R3) abzweigt,
- ein Hauptleitungsrohr (R1) ausgebildet wird, von welchem aus das zumindest eine Bereichsleitungsrohr (R2) abzweigt,
- ein zweiter Drucksensor (16b) in jedem Bereichsleitungsrohr (R2) positioniert wird,
- ein dritter Drucksensor (16c) im Hauptleitungsrohr (R1) positioniert wird,
- die Elemente (15, 50, 200, 300) zum Erzeugen und Steuern eines eingehenden Frischluftstroms (L1) ausgebildet werden:
- durch Positionieren eines Lüfters (15) zu Beginn des Hauptleitungsrohrs (R1), wobei der eingehende Frischluftstrom (L1) durch den Lüfter (15) in das Hauptleitungsrohr (R1) zugeführt wird,
- durch Positionieren eines zweiten Steuerelements (50) zu Beginn von jedem Bereichsleitungsrohr (R2), wobei der eingehende Frischluftstrom, welcher vom Hauptleitungsrohr (R1) in das Bereichsleitungsrohr (R2) geleitet wird, durch das zweite Steuerelement (50) gesteuert wird,
- durch Ausbilden einer zweiten Steuereinheit (200), durch welche ein zweites Steuerelement (50) basierend auf der Messinformation des zweiten Drucksensors (16b) gesteuert wird,
- durch Ausbilden einer dritten Steuereinheit (300), durch welche der Lüfter (15) basierend auf der Messinformation des dritten Drucksensors (16c) gesteuert wird.

12. Verfahren nach einem der Ansprüche 8 bis 11, **dadurch gekennzeichnet, dass** die erste Steuereinheit (100) dazu programmiert ist, dass sie drei Betriebsmodi enthält:
- einen Sparbetriebsmodus, bei welchem die Anschlussvorrichtung (10) bei einem niedrigen Druck und somit ebenso mit einem geringen Luftvolumen angetrieben wird,
- einen Normalbetriebsmodus, bei welchem die Anschlussvorrichtung (10), im Vergleich zum Sparbetriebsmodus, bei größeren Drücken und somit ebenso mit größeren Luftvolumina angetrieben wird,
- einen Verstärkungsbetriebsmodus, bei welchem die Anschlussvorrichtung (10), im Vergleich zum Normalbetriebsmodus, bei größeren Drücken und somit ebenso mit größeren Luftvolumina angetrieben wird.

13. Verfahren nach Anspruch 12, **dadurch gekennzeichnet, dass** die erste Steuereinheit (100) von jedem Raum (H) mit einer zweiten Steuereinheit (200) verbunden ist, wobei die erste Steuereinheit (100) eine Information an die zweite Steuereinheit (200) überträgt:
- wenn das erste Steuerelement (11) des Raumleitungsrohrs (R3) um mehr als 85% geöffnet ist, wobei die zweite Steuereinheit (200) die Druckeinstellung des Bereichsleitungsrohrs (R2) erhöht, wodurch ein Anstieg des Luftvolumens, welches dem zumindest einen Raumleitungsrohr (R3) zugeführt wird, ermöglicht wird,
- wenn die erste Steuereinheit (100) des Raums (H) zu einem Betriebsmodus mit geringerem Druck umschaltet, das heißt vom Verstärkungsbetriebsmodus zum Normalbetriebsmodus oder vom Normalbetriebsmodus zum Sparbetriebsmodus, wobei die zweite Steuereinheit (200) die Druckeinstellung des Bereichsleitungsrohrs (R2) verringert, wenn die zweite Steuereinheit (200) erfasst, dass alle erste Steuereinheiten (100) des Raums (H), welche mit dem Bereichsleitungsrohr (R2) verbunden sind, zu einem Betriebsmodus mit geringerem Druck umgeschaltet haben.

14. Verfahren nach Anspruch 13, **dadurch gekennzeichnet, dass** die Druckeinstellung der zweiten Steuereinheit (200), welche mit dem Bereichsleitungsrohr (R2) verbunden ist, innerhalb einer spezifischen Zeitperiode auf einen niedrigeren oder höheren Druckpegel geändert wird, und dann die Druckeinstellung des Bereichsleitungsrohrs (R2) auf den Pegel zurückgesetzt wird, welcher vor dem Zustand der Änderung vorherrschte.

## Revendications

1. Système de climatisation, comprenant :
- des moyens (15, 50, 200, 300) permettant de produire et commander un flux d'air entrant frai (L1),
- au moins un conduit de pièce (R3), par lequel un flux d'air entrant frais (L1) est conduit dans une pièce (H) qui est climatisée,
- un dispositif de terminal (10),
- un premier organe régulateur (11, 15) situé dans le conduit de pièce (R2) avant le dispositif de terminal (10),
- une première unité de commande (100) située en liaison avec la pièce (H) qui est climatisée,
- un premier capteur de pression (16a) adapté au dispositif de terminal (10) et connecté à la première unité de commande (100),
**caractérisé en ce que** :
- ledit dispositif de terminal (10) est situé à une extrémité dudit au moins un conduit de pièce (R3) et lequel dispositif de terminal (10) comprend une chambre à air d'entrée (12) ayant des buses (13a, 13b, 13c, 13d) ou un trou de buse, à travers lesquelles le flux d'air entrant frais (L1) est conduit dans la pièce (H) qui est climatisée, qui conjointement avec lui-même, induit un flux d'air remis à circuler (L2) depuis la pièce (H), puis un flux d'air combiné (L1+L2) formé du flux d'air entrant frais (L1) et du flux d'air remis à circuler (L2) est conduit dans la pièce (H) qui est climatisée,
- ledit premier capteur de pression (16a) est adapté à la chambre à air d'entrée (12) du dispositif de terminal (10),
- dans lequel la pression de la chambre à air d'entrée (12) du dispositif de terminal (10) et par là même du flux d'air fourni par le dispositif de terminal (10) dans la pièce qui est climatisée est commandée par la première unité de commande (100) commandant le premier organe régulateur (11, 15).

2. Système de climatisation selon la revendication 1, **caractérisé en ce que** le dispositif de terminal (10) comprend en outre au moins un échangeur de chaleur (14), à travers lequel le flux d'air remis à circuler (L2) induit par le flux d'air entrant frais (L1) est conduit avant que le flux d'air remis à circuler (L2) soit combiné avec le flux d'air entrant frais (L1).

3. Système de climatisation selon la revendication 1 ou 2, **caractérisé en ce que** le système de climatisation comprend en outre :
- un conduit de zone (R2), à partir duquel ledit au moins un conduit de pièce (R3) se ramifie,
- un deuxième capteur de pression (16b) situé dans le conduit de zone (R2),
- dans lequel les moyens (15, 200) permettant de produire et commander le flux d'air entrant frais (L1) comprennent :
- un ventilateur (15) situé au début du conduit de zone (R2) et par lequel un flux d'air entrant frais (L1) est fourni dans le conduit de zone (R2),
- une deuxième unité de commande (200) grâce à laquelle le ventilateur (15) est commandé en se basant sur les messages de mesure du deuxième capteur de pression (16b).

4. Système de climatisation selon la revendication 1 ou 2, **caractérisé en ce que** le système de climatisation comprend en outre :
- au moins un conduit de zone (R2), à partir duquel ledit au moins un conduit de pièce (R3) se ramifie,
- un conduit principal (R1) à partir duquel ledit au moins un conduit de zone (R2) se ramifie,
- un deuxième capteur de pression (16b) situé dans chaque conduit de zone (R2),
- un troisième capteur de pression (16c) situé dans le conduit principal (R1),
- dans lequel les moyens (15, 50, 200, 300) permettant de produire et commander le flux d'air entrant frais (L1) comprennent :
- un ventilateur (15) situé au début du conduit principal (Rr) et par lequel un flux d'air entrant frais (L1) est fourni dans le conduit principal (R1),
- un second organe régulateur (50) situé au début de chaque conduit de zone (R2) et par lequel un flux d'air entrant frais conduit du conduit principal (R1) dans le conduit de zone (R2) est régulé,
- une deuxième unité de commande (200) grâce à laquelle un second organe régulateur (50) est commandé en se basant sur les messages de mesure du deuxième capteur de pression (16b),
- une troisième unité de commande (300) grâce à laquelle un ventilateur (15) est commandé en se basant sur les messages de mesure du troisième capteur de pression (16c).

5. Système de climatisation selon l'une quelconque des revendications 1 à 4, **caractérisé en ce que** la première unité de commande (100) est programmée pour avoir trois modes de fonctionnement :
- un mode d'éco-fonctionnement, dans lequel le dispositif de terminal (10) est entraîné à une basse pression et, ainsi, également avec un bas volume d'air,
- un mode de fonctionnement normal, dans lequel le dispositif de terminal (10) est entraîné par rapport au mode d'éco-fonctionnement à des plus grandes pressions et, ainsi également avec de plus grands volumes d'air,
- un mode de fonctionnement intensifié, dans lequel le dispositif de terminal (10) est entraîné par rapport au mode de fonctionnement normal à des plus grandes pressions et, ainsi également avec de plus grands volumes d'air.

6. Système de climatisation selon la revendication 5, **caractérisé en ce que** la première unité de commande (100) de chaque pièce (H) est connectée à une deuxième unité de commande (200), dans lequel la première unité de commande (100) envoie à la deuxième unité de commande (200) un message :
- lorsque le premier organe régulateur (11) du conduit de pièce (R3) est ouvert de plus de 85 %, dans lequel la deuxième unité de commande (200) augmente le réglage de pression du conduit de zone (R2), ce qui permet d'augmenter le volume d'air fourni audit au moins un conduit de pièce (R3),
- lorsque la première unité de commande (100) de la pièce (H) passe à un mode de fonctionnement de plus basse pression, c'est-à-dire du mode de fonctionnement intensifié au mode de fonctionnement normal ou du mode de fonctionnement normal au mode d'éco-fonctionnement, dans lequel la deuxième unité de commande (200) diminue le réglage de pression de ce conduit de zone (R2) lorsque la deuxième unité de commande (200) détecte que toutes les premières unités de commande (100) des pièces (H) connectées à ce conduit de zone (R2) sont passées à un mode de fonctionnement de plus basse pression.

7. Système de climatisation selon la revendication 6, **caractérisé en ce que** la deuxième unité de commande (200) comprend un dispositif minuteur, dans lequel le réglage de pression de la deuxième unité de commande (200) connectée au conduit de zone (R2) est changé pendant une période de temps spécifiée à un niveau de plus basse ou plus haute pression, puis le réglage de pression du conduit de zone (R2) est réglé à nouveau au niveau prévalent avant l'état de changement.

8. Procédé de climatisation, dans lequel :
- des moyens (15, 50, 200, 300) sont formés pour produire et commander un flux d'air entrant frais (L1),
- au moins un conduit de pièce (R3) est formé, grâce auquel le flux d'air entrant frais (L1) est conduit dans une pièce (H) qui est climatisée,
- un dispositif de terminal (10) est utilisé,
- le flux d'air conduit de chaque dispositif de terminal (10) dans la pièce est régulé en régulant un premier organe régulateur (11, 15) présent dans le conduit de pièce (R3) avant le dispositif de terminal (10) avec une première unité de commande (100),
- la pression dans le dispositif de terminal (10) est mesurée par un premier capteur de pression (16a),
**caractérisé en ce que** :
- ledit dispositif de terminal (10) est situé à une extrémité de chaque conduit de pièce (R3), lequel dispositif de terminal (10) comprend une chambre à air d'entrée (12) comportant des buses (13a, 13b, 13c, 13d) ou un trou de buse, à travers lesquelles le flux d'air entrant frais (L1) est conduit dans la pièce (H) qui est climatisée, qui conjointement avec lui-même, induit un flux d'air remis à circuler (L2) depuis la pièce (H), puis un flux d'air combiné (L1+L2) formé du flux d'air entrant frais (L1) et du flux d'air remis à circuler (L2) est conduit dans la pièce (H) qui est climatisée,
- ledit premier capteur de pression (16a) mesure la pression dans la chambre à air d'entrée (12) du dispositif de terminal (10),
- la pression de la chambre à air d'entrée (12) du dispositif de terminal (10) et à travers celle-ci le flux d'air fourni du dispositif de terminal (10) dans la pièce qui est climatisée sont régulés avec une première unité de commande (100) commandant le premier organe régulateur (11, 15).

9. Procédé selon la revendication 8, **caractérisé en ce que** le flux d'air remis à circuler (L2) induit par le flux d'air entrant frais (L1) est conduit depuis la pièce à travers au moins un échangeur de chaleur (14) inclus dans le dispositif de terminal (10) avant que le flux d'air remis à circuler (L2) soit combiné avec le flux d'air entrant (L1).

10. Procédé selon la revendication 8 ou 9, **caractérisé en ce que**
- un conduit de zone (R2) est formé, à partir duquel ledit au moins un conduit de pièce (R3) se ramifie,
- un deuxième capteur de pression (16b) est placé dans le conduit de zone (R2),
- lesdits moyens (15, 200) permettant de produire et commander le flux d'air entrant frais (L1) sont formés :
- en plaçant un ventilateur (15) au début du conduit de zone (R2), par lequel le ventilateur (15) fournit le flux d'air entrant frais (L1) dans le conduit de zone (R2),
- en formant une deuxième unité de commande (200) par laquelle le ventilateur (15) est commandé en se basant sur les messages de mesure du deuxième capteur de pression (16b).

11. Procédé selon la revendication 8 ou 9, **caractérisé en ce que**
- au moins un conduit de zone (R2) est formé, à partir duquel ledit au moins un conduit de pièce (R3) se ramifie,
- un conduit principal (R1) est formé, à partir duquel ledit au moins un conduit de zone (R2) se ramifie,
- un deuxième capteur de pression (16b) est situé dans chaque conduit de zone (R2),
- un troisième capteur de pression (16c) est situé dans le conduit principal (R1),
- lesdits moyens (15, 50, 200, 300) permettant de produire et commander un flux d'air entrant frais (L1) sont formés :
- en plaçant un ventilateur (15) au début du conduit principal (R1), à partir duquel ventilateur (15) le flux d'air entrant frais (L1) est fourni dans le conduit principal (R1),
- en plaçant un second organe régulateur (50) au début de chaque conduit de zone (R2), par lequel second organe régulateur (50) le flux d'air entrant frais conduit du conduit principal (R1) dans le conduit de zone (R2) est régulé,
- en formant une deuxième unité de commande (200), par laquelle un second organe régulateur (50) est commandé en se basant sur les messages de mesure du deuxième capteur de pression (16b),
- en formant une troisième unité de commande (300) par laquelle le ventilateur (15) est commandé en se basant sur les messages de mesure du troisième capteur de pression (16c).

12. Procédé selon l'une quelconque des revendications 8 à 11, **caractérisé en ce que** la première unité de commande (100) est programmée pour avoir trois modes de fonctionnement :
- un mode d'éco-fonctionnement, dans lequel le dispositif de terminal (10) est entraîné à une basse pression et, ainsi, également avec un bas volume d'air,
- un mode de fonctionnement normal, dans lequel le dispositif de terminal (10) est entraîné par rapport au mode d'éco-fonctionnement à des plus grandes pressions et, ainsi également avec de plus grands volumes d'air,
- un mode de fonctionnement intensifié, dans lequel le dispositif de terminal (10) est entraîné en rapport au mode de fonctionnement normal à des plus grandes pressions et, ainsi également avec de plus grands volumes d'air.

13. Procédé selon la revendication 12, **caractérisé en ce que** la première unité de commande (100) de chaque pièce (H) est connectée à une deuxième unité de commande (200), dans lequel la première unité de commande (100) envoie à la deuxième unité de commande (200) un message :
- lorsque le premier organe régulateur (11) du conduit de pièce (R3) est ouvert de plus de 85 %, dans lequel la deuxième unité de commande (200) augmente le réglage de pression du conduit de zone (R2), ce qui permet d'augmenter le volume d'air fourni audit au moins un conduit de pièce (R3),
- lorsque la première unité de commande (100) de la pièce (H) passe à un mode de fonctionnement de plus basse pression, c'est-à-dire du mode de fonctionnement intensifié au mode de fonctionnement normal ou du mode de fonctionnement normal au mode d'éco-fonctionnement, dans lequel la deuxième unité de commande (200) diminue le réglage de pression de ce conduit de zone (R2) lorsque la deuxième unité de commande (200) détecte que toutes les premières unités de commande (100) des pièces (H) connectées à ce conduit de zone (R2) sont passées à un mode de fonctionnement de plus basse pression.

14. Procédé selon la revendication 13, **caractérisé en ce que** le réglage de pression de la deuxième unité de commande (200) connectée au conduit de zone (R2) est changé pendant une période de temps spécifiée à un niveau de plus basse ou plus haute pression, puis le réglage de pression du conduit de zone (R2) est réglé à nouveau au niveau prévalent avant l'état de changement.
